# EUROPEAN PATENT APPLICATION

(11) **EP 4 435 751 A1**
(43) Date of publication of application: **25.09.2024**
(21) Application number: 22894804.8
(22) Date of filing: 15.11.2022
(51) Int. Cl.: G08G 1/0967, G06F 16/23

(54) **MAP UPDATE METHOD AND APPARATUS**

(30) Priority: 18.11.2021 CN 202111372391
(71) Applicant: Beijing CHJ Information Technology Co., Ltd., Beijing 101399 (CN)
(72) Inventor: WU, Wei, Beijing 101399 (CN)
(74) Representative: Maiwald GmbH
(86) International application number: PCT/CN2022/132090
(87) International publication number: WO 2023/088271

(57) **Abstract**

A map update method and apparatus, an electronic device, and a readable storage medium. The method comprises: acquiring a target vehicle traveling on a target road and travel information of the target vehicle (101); determining a recommended speed limit for each segment of the target road according to the travel information (102); and updating a map according to the recommended speed limit (103).

## Description

### CROSS-REFERENCE TO RELATED APPLICATIONS

This application is based on and claims priority to Chinese Patent Application No. 202111372391.6, filed on November 18, 2021, the entire contents of which are incorporated herein by reference.

### TECHNICAL FIELD

The disclosure relates to a field of intelligent transportation technologies, and specifically to a method and an apparatus for updating a map, an electronic device and a readable storage medium.

### BACKGROUND

In recent years, as automobiles become more and more popular, an automobile navigation system develops very rapidly. People may not only select a navigation system as a selection configuration when buying a new automobile, but also may install an electronic map on an existing automobile, and navigate through the electronic map, which greatly improves a driving experience of a user.

A speed limit of the navigation map in a current technical center is set by an operator according to a road speed limit sign. If there is no road speed limit information on the road, the operator pushes and configures the speed limit according to laws and regulations, but it is inevitable to have a subjective judgment of the operator. An incorrect operation of the operator may be included.

### SUMMARY

A first purpose of the present disclosure is to propose a method for updating a map.

A second purpose of the present disclosure is to propose an apparatus for updating a map.

A third purpose of the present disclosure is to propose an electronic device.

A fourth purpose of the present disclosure is to propose a non-transitory computer-readable storage medium.

A fifth purpose of the present disclosure is to propose a computer program product.

A sixth purpose of the present disclosure is to propose a computer program.

In order to achieve the above purposes, a method for updating a map is provided in a first aspect of implementation of the disclosure, and includes: acquiring target vehicles traveling on a target road and traveling information of the target vehicles; determining a recommended speed limit of each of road sections on the target road according to the traveling information; and updating the map according to the recommended speed limit.

According to an implementation of the disclosure, acquiring the target vehicles traveling on the target road includes: acquiring candidate vehicles traveling on the target road; acquiring traveling directions of the candidate vehicles; and taking candidate vehicles with the same traveling direction as the target vehicles.

According to an implementation of the disclosure, acquiring the candidate vehicles traveling on the target road includes: acquiring a traveling trajectory of a vehicle traveling on a road network; and matching the traveling trajectory with the target road, and selecting and determining a vehicle with the traveling trajectory consistent with a road shape of the target road the candidate vehicle.

According to an implementation of the disclosure, the traveling information includes road sections of the target road where the target vehicles travel and traveling speeds of the target vehicles on the road section.

According to an implementation of the disclosure, determining the recommended speed limit of each of the road sections on the target road according to the traveling information includes: acquiring, for each of the road sections, a traveling speed of each of the target vehicles on the road section according to the traveling information; and determining the recommended speed limit of the road section according to the traveling speed of each of the target vehicles on the road section.

According to an implementation of the disclosure, before determining the recommended speed limit of each of the road sections on the target road according to the traveling information, the method further includes: acquiring a speed limit threshold of the road section; comparing the traveling information with the speed limit threshold; and removing traveling information greater than the speed limit threshold.

According to an implementation of the disclosure, determining the recommended speed limit of the road section according to the traveling speed of each of the target vehicles on the road section includes: counting an occurrence frequency of each traveling speed; and selecting a traveling speed with the highest occurrence frequency as the recommended speed limit of the road section.

According to an implementation of the disclosure, determining the recommended speed limit of the road section according to the traveling speed of each of the target vehicles on the road section includes: acquiring a reference traveling speed according to the traveling speed of each of the target vehicles on the road section; acquiring a difference between the reference traveling speed and an original speed limit of the road section; and determining the recommended speed limit of the road section based on the difference.

In order to achieve the above purposes, an apparatus for updating a map is provided in a second aspect of implementation of the disclosure, and includes: an acquiring module, configured to acquire target vehicles traveling on a target road and traveling information of the target vehicles; a determining module, configured to determine a recommended speed limit of each of road sections on the target road according to the traveling information; and an updating module, configured to update the map according to the recommended speed limit.

According to an implementation of the disclosure, the acquiring module is further configured to: acquire candidate vehicles traveling on the target road; acquire traveling directions of the candidate vehicles; and take candidate vehicles with the same traveling direction as the target vehicles.

According to an implementation of the disclosure, the acquiring module is further configured to: acquire a traveling trajectory of a vehicle traveling on a road network; and match the traveling trajectory with the target road, and select and determine a vehicle with the traveling trajectory consistent with a road shape of the target road as a candidate vehicle.

According to an implementation of the disclosure, the determining module is further configured to: acquire, for each of the road sections, a traveling speed of each of the target vehicles on the road section according to the traveling information; and determine the recommended speed limit of the road section according to the traveling speed of each of the target vehicles on the road section.

According to an implementation of the disclosure, the determining module is further configured to: count an occurrence frequency of each traveling speed; and select a traveling speed with the highest occurrence frequency as the recommended speed limit of the road section.

According to an implementation of the disclosure, the determining module is further configured to: acquire a reference traveling speed according to the traveling speed of each of the target vehicles on the road section; acquire a difference between the reference traveling speed and an original speed limit of the road section; and determine the recommended speed limit of the road section based on the difference.

According to an implementation of the disclosure, the traveling information includes road sections of the target road where the target vehicles travel and traveling speeds of the target vehicles on the road section.

In order to achieve the above purposes, an electronic device is provided in a third aspect of implementation of the disclosure, and includes: at least one processor; and a memory communicatively connected to the at least one processor; in which the memory stores instructions executable by the at least one processor, and when the instructions are executed by the at least one processor, the method for updating the map according to the first aspect of embodiments of the disclosure is implemented.

In order to achieve the above purposes, a non-transitory computer-readable storage medium storing computer instructions is provided in a fourth aspect of implementation of the disclosure, in which the computer instructions are configured to implement the method for updating the map according to the first aspect of embodiments of the disclosure.

In order to achieve the above purposes, a computer program product is provided in a fifth aspect of implementation of the disclosure, and includes a computer program, in which when the computer program is executed by a processor, the method for updating the map according to the first aspect of embodiments of the disclosure is implemented.

In order to achieve the above purposes, a computer program storing a computer program code is provided in a sixth aspect of implementation of the disclosure. When the computer program code runs on a computer, the computer is caused to perform the method for updating the map according to the first aspect of embodiments of the disclosure.

### BRIEF DESCRIPTION OF THE DRAWINGS

FIG. 1 is a diagram illustrating a method for updating a map according to an implementation of the disclosure.
FIG. 2 is a diagram illustrating another method for updating a map according to an implementation of the disclosure.
FIG. 3 is a diagram illustrating another method for updating a map according to an implementation of the disclosure.
FIG. 4 is a diagram illustrating another method for updating a map according to an implementation of the disclosure.
FIG. 5 is a schematic block diagram illustrating an apparatus for updating a map according to an implementation of the disclosure.
FIG. 6 is a schematic block diagram illustrating an electronic device according to an implementation of the disclosure.

### DETAILED DESCRIPTION

Embodiments of the disclosure will be described and examples of the embodiments are illustrated in the drawings. The same or similar elements and the elements having the same or similar functions are denoted by like reference numerals throughout the descriptions. The embodiments described herein with reference to drawings are explanatory, serve to explain the disclosure, and are not construed to limit the embodiments of the disclosure.

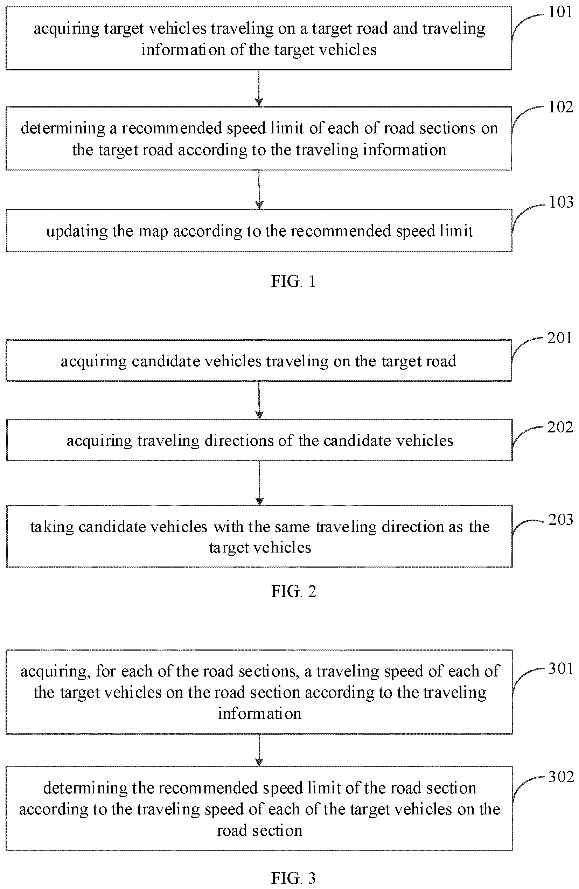

FIG. 1 is a diagram illustrating a method for updating a map according to an embodiment of the disclosure. As illustrated in FIG. 1, the method for updating the map includes steps 101 to 103.

At 101, target vehicles traveling on a target road and traveling information of the target vehicles are acquired.

It should be noted that types of the target road may be various. For example, the target road may be a high-speed ramp, a rural road, a sharp curve, etc.

In an embodiment of the disclosure, recommended speed limits of different types of target roads are often different. For example, a recommended speed limit for the high speed ramp may be 50 KM/h, a recommended speed limit for the rural road may be 55 KM/h, and a recommended speed limit for the sharp curve may be 27 KM/h.

Further, the target road may include a plurality of road sections. A speed limit of each of the plurality of road sections may be different. For example, the rural road may include two road sections. One of the two road sections is a normal road, and its recommended speed limit may be 30 Km/h. The other of the two road sections may be a riverside road, and its recommended speed limit may be 25 KM/h.

In an embodiment of the disclosure, traveling data of the vehicle may be uploaded to a server through an electronic map application (APP) installed on the vehicle. Further, the server may process uploaded data to determine whether the vehicle is a target vehicle traveling on the target road.

In some embodiments, the sever may be connected to a road information base and/or a traffic management platform, from which the target vehicle traveling on the target road is acquired. Specifically, the traveling trajectory of the vehicle may be acquired from the information base and/or the traffic management platform, and whether the vehicle is a target vehicle traveling on the target road may be determined according to the traveling trajectory of the vehicle.

In some embodiments, the traveling data of the vehicle may be uploaded to the server through a positioning system of the vehicle. Further, the server may process uploaded data to determine whether the vehicle is a target vehicle traveling on the target road. In an embodiment of the disclosure, traveling information of the vehicle may be various. For example, the traveling information may include a traveling trajectory, a traveling speed and a traveling direction of the target vehicle, etc. The traveling information may be set according to the actual requirement.

At step 102, a recommended speed limit of each of road sections on the target road is determined according to the traveling information.

It may be understood that, the target road may include at least one road section. A recommended speed limit of each of the at least one road section may be different due to a road condition and a road position.

In an embodiment of the disclosure, each of road sections generally has a specified speed limit. The speed limit generally refers to a traveling speed within a specified numerical range for a road section within a certain length distance, which mainly aims to remind a driver of controlling a vehicle speed reasonably and preventing an overspeed danger in driving a front subsequent road section. The speed limit is an indispensable and most important part of road transportation safety.

In an actual driving process, due to the road condition and the road position, the vehicle speed of the driver on each of road sections of the target road is usually not same as a specified speed limit. There will be a vehicle speed on the target road for a plurality of drivers. The vehicle speed is the recommended speed limit on the target road. The recommended speed limit may be greater than or less than the specified speed limit, but the recommended speed limit must be within an allowable range of the traffic law.

In an embodiment of the present disclosure, the vehicle speed on the target road for the plurality of drivers may be mined as the recommended speed limit by processing traveling information of a plurality of target vehicles.

In some embodiments, the recommended speed limit of each of road sections on the target road may be generated by inputting the traveling information of the target vehicles into a recommended speed limit determining model for processing. It should be noted that, the recommended speed limit determining model may be pre-trained and stored in a storage space of the server for calling to use when necessary.

At 103, the map is updated according to the recommended speed limit.

The target road is located from the map based on an identifier or position information of the target road. Further, a recommended speed limit list of each of road sections on the target road is acquired, and the existing recommended speed limit bound to each of road sections in the recommended speed limit list is updated to a recommended speed limit currently determined. In an embodiment of the disclosure, after map updating is completed, a navigation service may be provided for a subsequent vehicle based on the updated map, to improve accuracy and safety of navigation.

It should be noted that, the recommended speed limit of each of road sections on the target road may be acquired, and the map may be updated according to a map updating period. The map updating period may be set according to actual requirements. For example, the map updating period may be 12 hours, 24 hours, 48 hours, which is not limited.

In an embodiment of the disclosure, the target vehicles traveling on the target road are acquired first, the traveling information of the target vehicles is acquired, the recommended speed limit of each of road sections on the target road is acquired according to the traveling information, and the map is updated according to the recommended speed limit. Therefore, a recommended speed limit at which a majority of vehicles pass is determined by analyzing the traveling information of the target vehicles on the target road, and the map is optimized and updated according to the recommended speed limit, which provides an optimal reference vehicle speed for the vehicle to travel on the target road subsequently, and greatly improves navigation accuracy, practicability and traveling safety of the map.

Therefore, a speed limit threshold of the road section can be acquired; the traveling information can be compared with the speed limit threshold; and the traveling information greater than the speed limit threshold can be removed. Specifically, after the traveling information of the target vehicles is acquired, the traveling information can be compared with a specified speed limit of the road section, and extreme data in the traveling information such as serious overspeed data can be filtered out, to facilitate subsequent processing of the traveling information.

In order to understand acquiring the target vehicles traveling on the target road in the above embodiments of the disclosure, a further explanation may be made in FIG. 2. The method includes 201 to 203.

At 201, candidate vehicles traveling on the target road are acquired.

In an embodiment of the disclosure, a traveling trajectory of a vehicle traveling on a road network may be acquired, the traveling trajectory may be matched with the target road, and a vehicle with the traveling trajectory consistent with a road shape of the target road may be selected and determined as a candidate vehicle.

In an embodiment of the disclosure, the traveling trajectory of the vehicle may be acquired by processing driving data uploaded by the vehicle.

At 202, traveling directions of the candidate vehicle are acquired.

In an embodiment of the disclosure, the traveling direction of the vehicle may be acquired by analyzing the traveling trajectory of the candidate vehicle.

In some embodiments, the traveling directions of the candidate vehicles may be determined by extracting heading angle information of the candidate vehicle. It needs to be noted that, the heading angle of the vehicle is an included angle between a vehicle speed and the north pole of the earth. Further, the heading angle of the vehicle may be acquired by a sensor of the vehicle.

At 203, candidate vehicles with the same traveling direction are taken as the target vehicles.

In an embodiment of the present disclosure, recommended speeds of the candidate vehicle in different directions may be different due to a road type of the target road or a specific road condition. Therefore, the candidate vehicle with a traveling direction same as a target traveling direction needs to be taken as the target vehicle.

For example, when the target road is a two-way curve, a recommended speed limit of an outer lane may be 35 KM/h and a recommended speed limit of an inner lane may be 40 KM/h. For another example, when the target road is a construction road, a left lane is the construction road, and a recommended speed limit of the left lane may be 25 KM/h, a right lane is a normal road, and a recommended speed limit of the right lane may be 50 KM/h.

In an embodiment of the disclosure, the candidate vehicles traveling on the target road are acquired first, then the traveling directions of the candidate vehicles are acquired, and the candidate vehicles with the same traveling direction are taken as the target vehicles. Therefore, the target vehicle is acquired by screening the candidate vehicle in the traveling direction, so that traveling data of the vehicle on the target road may be acquired more accurately, which provides a basis for determining the recommended speed limit subsequently.

In order to understand the above embodiments of the disclosure, a further explanation may be made in FIG. 3. The method includes 301 to 302.

At 301, a traveling speed of each of the target vehicles is acquired on each of the road sections according to the traveling information.

In an embodiment of the disclosure, a traveling trajectory point of the target vehicle may be matched with a position of each of road sections, to acquire the traveling speed of the target vehicle on each of the road sections.

At 302, the recommended speed limit of the road section is determined according to the traveling speed of each of the target vehicles on the road section.

In an embodiment of the disclosure, an occurrence frequency of each traveling speed may be counted first, and a traveling speed with the highest occurrence frequency may be selected as the recommended speed limit of the road section. Therefore, a most commonly used speed at which the driver passes through the road section may be obtained, which provides a reference for a map user.

In some embodiments, the travel speed may be processed first. For example, individual extreme data needs to be removed in combination with road laws and speed limit signs. For example, severe overspeed, a speed below a minimum speed limit requirement, etc. are removed.

Further, recommended speed limits of all road sections may be composed to form a recommended speed limit set of the target road, which provides an optimal reference vehicle speed for the vehicle to travel on the target road subsequently, and greatly improves navigation accuracy.

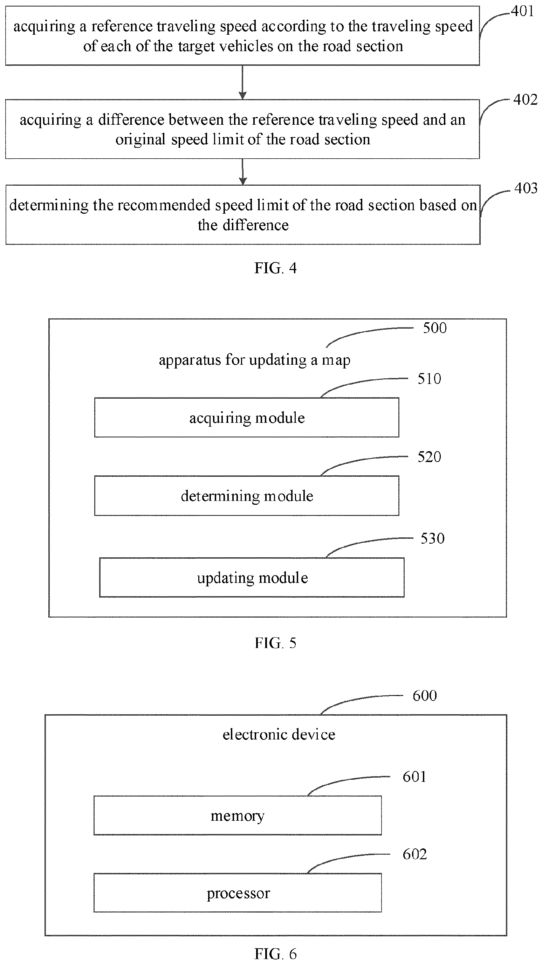

In order to understand the recommended speed limit of the road section is determined according to the traveling speed of each target vehicle on the road section according to the above embodiments, a further explanation may be made in FIG. 4. As illustrated in FIG. 4, the method includes 401 to 403.

At 401, a reference traveling speed is acquired according to the traveling speed of each of the target vehicles on the road section.

In some embodiments, the reference traveling speed may be an average speed of all target vehicles on the road section.

In some embodiments, the traveling speed of each of the target vehicles on the road section may be counted, and a traveling speed with the highest occurrence frequency on each of the road sections may be selected as the reference traveling speed.

At 402, a difference between the reference traveling speed and an original speed limit of the road section is acquired.

In an embodiment of the disclosure, the original speed limit is a recommended speed limit in the map. After the reference traveling speed is acquired, the reference speed may be compared with the original speed limit of each of the road section, to acquire the difference between the reference traveling speed and the original speed limit of the road section.

At 403, the recommended speed limit of the road section is determined based on the difference. Based on contents described in the above embodiments, if the difference between the reference traveling speed and the original speed limit of the road section is small, it indicates the original speed limit of the road section may be maintained, and no map updating is required.

In some embodiments, if the difference between the reference traveling speed and the original speed limit of the road section is large, it indicates a match between the original speed limit and the target road is low, and the reference traveling speed cannot be accurately provided for the vehicle traveling on the target road, and the map needs to be updated according to a new recommended speed.

Specifically, if the difference between the reference traveling speed and the original speed limit of the road section is less than a comparison threshold, it is deemed that the difference is small, and if the difference between the reference traveling speed and the original speed limit of the road section is greater than the comparison threshold, it is deemed that the difference is large. It needs to be noted that the comparison threshold is not fixed, and may be set according to actual situations. For example, the comparison threshold may be 20%.

In an embodiment of the disclosure, the reference traveling speed is acquired according to the traveling speed of each of the target vehicles on the road section first, then the difference between the reference traveling speed and the original speed limit of the road section is acquired, and the recommended speed limit of the road section is determined based on the difference. Therefore, a latest recommended speed can be compared with the original speed limit to determine whether the target road needs to be updated, to prevent frequency updating, resulting in inaccurate map updating.

FIG. 5 is a diagram illustrating an apparatus for updating a map according to the disclosure. As illustrated in FIG. 5, an apparatus 500 for updating a map includes an acquiring module 510, a determining module 520, a determining module 530, and an updating module 540.

The acquiring module 510 is configured to acquire target vehicles traveling on a target road.

The determining module 520 is configured to acquire traveling information of the target vehicles.

The determining module 530 is configured to determine a recommended speed limit of each of road sections on the target road according to the traveling information.

The updating module 540 is configured to update the map according to the recommended speed limit.

In an embodiment of the disclosure, the acquiring module 510 is further configured to: acquire a candidate vehicle traveling module; acquire traveling directions of the candidate vehicles; and take candidate vehicles with the same traveling direction as the target vehicles.

In an embodiment of the disclosure, the acquiring module 510 is further configured to: acquire a traveling trajectory of a vehicle traveling on a road network; and match the traveling trajectory with the target road, and select and determine a vehicle with the traveling trajectory consistent with a road shape of the target road as a candidate vehicle.

In an embodiment of the disclosure, the determining module 530 is further configured to: acquire, for each of the road sections, a traveling speed of each of the target vehicles on the road section according to the traveling information; and determine the recommended speed limit of the road section according to the traveling speed of each of the target vehicles on the road section.

In an embodiment of the disclosure, the determining module 530 is further configured to: count an occurrence frequency of each traveling speed; and select a traveling speed with the highest occurrence frequency as the recommended speed limit of the road section.

In an embodiment of the disclosure, the determining module 530 is further configured to: acquire a reference traveling speed according to the traveling speed of each of the target vehicles on the road section; acquire a difference between the reference traveling speed and an original speed limit of the road section; and determine the recommended speed limit of the road section based on the difference.

In an embodiment of the disclosure, the traveling information includes a road section of the target vehicles traveling on the target road and a traveling speed of the target vehicle on each of the road sections.

In order to implement the above embodiments, an electronic device 600 is further provided according to an embodiment of the disclosure. As illustrated in FIG. 6, the electronic device 600 includes a processor 601 and a memory 602 communicatively connected to the processor; the memory 602 stores instructions executable by at least one processor, and when the instructions are executed by the at least one processor, the method for updating the map according to the first aspect of embodiments of the present disclosure is implemented.

In order to implement the above purposes, a non-transitory computer-readable storage medium storing computer instructions is further provided according to an embodiment of the disclosure, in which the computer instructions are configured to cause a computer to implement the method for updating the map according to the first aspect of embodiments of the disclosure.

In order to implement the above purposes, a computer program product is provided according to an embodiment of the disclosure, and includes a computer program, in which when the computer program is executed by a processor, the method for updating the map according to the first aspect of embodiments of the disclosure is implemented.

In order to implement the above purposes, a computer program storing a computer executable code is provided according to an embodiment of the disclosure. When the computer program code runs on a computer, the computer is caused to perform the method for updating the map according to the first aspect of embodiments of the disclosure.

It needs to be noted that, explanation of the embodiments of the method for updating the map is applicable to the apparatus for updating the map, the non-transitory computer-readable storage medium, the electronic device, the computer program product and the computer program, which will not be repeated here.

In description of the present disclosure, it should be understood that an orientation or position relationship indicated by terms "center", "longitudinal", "horizontal", "upper", "lower", "front", "rear", "left ", "right", "vertical", "horizontal", "top", "bottom", "inner", "outer", "clockwise", "counterclockwise", "axial", "radial", "circumferential" and the like is merely an orientation or position relationship shown in accompanying drawings, rather than indicating or implying that the referred apparatus or element must have a specific orientation to construct and operate in a specific orientation, and therefore, cannot be understood as a limitation to the present disclosure.

In addition, terms "first" and "second" used in the present disclosure are only for description purpose, and may not be understood as indicating or implying a relative importance or implying a number of technical features indicated by implication. Therefore, features limiting "first" and "second" may explicitly or implicitly include one or more of the features. In the description of the present disclosure, "a plurality of' means two or more than two, unless otherwise specified.

In descriptions of the specification, descriptions with reference to terms "one embodiment", "some embodiments", "examples", "specific examples" or "some examples" etc. mean specific features, structures, materials or characteristics described in conjunction with the embodiment or example are included in at least one embodiment or example of the present disclosure. The appearances of the above phrases in various places throughout this specification are not necessarily referring to the same embodiment or example of the disclosure. Moreover, specific features, structures, materials or characteristics described may be combined in any one or more embodiments or examples in a suitable manner. In addition, those skilled in the art may combine different embodiments or examples and characteristics of different embodiments or examples described in this specification without contradicting each other.

It should be understood that, notwithstanding the embodiments of the present disclosure are shown and described above, the above embodiments are exemplary in nature and shall not be construed as a limitation of the present disclosure. Those skilled in the art may change, modify, substitute and vary the above embodiments within the scope of the present disclosure.

All embodiments of the disclosure may be executed separately or in combination with other embodiments, and are deemed within a protection scope of the disclosure.

## Claims

1. A method for updating a map, comprising:
acquiring target vehicles traveling on a target road and traveling information of the target vehicles;
determining a recommended speed limit of each of road sections on the target road according to the traveling information; and
updating the map according to the recommended speed limit.

2. The method according to claim 1, wherein acquiring the target vehicles traveling on the target road comprises:
acquiring candidate vehicles traveling on the target road;
acquiring traveling directions of the candidate vehicles; and
taking candidate vehicles with the same traveling direction as the target vehicles.

3. The method according to claim 2, wherein acquiring the candidate vehicles traveling on the target road comprises:
acquiring a traveling trajectory of a vehicle traveling on a road network; and
matching the traveling trajectory with the target road, and selecting and determining a vehicle with the traveling trajectory consistent with a road shape of the target road as a candidate vehicle.

4. The method according to any one of claims 1 to 3, wherein the traveling information comprises road sections of the target road where the target vehicles travel and traveling speeds of the target vehicles on the road section.

5. The method according to claim 4, wherein determining the recommended speed limit of each of the road sections on the target road according to the traveling information comprises:
acquiring, for each of the road sections, a traveling speed of each of the target vehicles on the road section according to the traveling information; and
determining the recommended speed limit of the road section according to the traveling speed of each of the target vehicles on the road section.

6. The method according to claim 5, wherein determining the recommended speed limit of the road section according to the traveling speed of each of the target vehicles on the road section comprises:
counting an occurrence frequency of each traveling speed; and
selecting a traveling speed with the highest occurrence frequency as the recommended speed limit of the road section.

7. The method according to claim 5, wherein determining the recommended speed limit of the road section according to the traveling speed of each of the target vehicles on the road section comprises:
acquiring a reference traveling speed according to the traveling speed of each of the target vehicles on the road section;
acquiring a difference between the reference traveling speed and an original speed limit of the road section; and
determining the recommended speed limit of the road section based on the difference.

8. The method according to any one of claims 1 to 7, wherein before determining the recommended speed limit of each of the road sections on the target road according to the traveling information, the method further comprises:
acquiring a speed limit threshold of the road section;
comparing the traveling speed of the traveling information with the speed limit threshold; and
removing traveling information greater than the speed limit threshold.

9. An apparatus for updating a map, comprising:
an acquiring module, configured to acquire target vehicles traveling on a target road and traveling information of the target vehicles;
a determining module, configured to determine a recommended speed limit of each of road sections on the target road according to the traveling information; and
an updating module, configured to update the map according to the recommended speed limit.

10. The apparatus according to claim 9, wherein the acquiring module is further configured to:
acquire candidate vehicles traveling on the target road;
acquire traveling directions of the candidate vehicles; and
take candidate vehicles with the same traveling direction as the target vehicles.

11. The apparatus according to claim 10, wherein the acquiring module is further configured to:
acquire a traveling trajectory of a vehicle traveling on a road network; and
match the traveling trajectory with the target road, and
select and determine a vehicle with the traveling trajectory consistent with a road shape of the target road as a candidate vehicle.

12. The apparatus according to any one of claims 9 to 11, wherein the determining module is further configured to:
acquire, for each of the road sections, a traveling speed of each of the target vehicles on the road section according to the traveling information; and
determine the recommended speed limit of the road section according to the traveling speed of each of the target vehicles on the road section.

13. The apparatus according to claim 12, wherein the determining module is further configured to:
count an occurrence frequency of each traveling speed; and
select a traveling speed with the highest occurrence frequency as the recommended speed limit of the road section.

14. The apparatus according to claim 12, wherein the determining module is further configured to:
acquire a reference traveling speed according to the traveling speed of each of the target vehicles on the road section;
acquire a difference between the reference traveling speed and an original speed limit of the road section; and
determine the recommended speed limit of the road section based on the difference.

15. The apparatus according to any one of claims 9 to 14, wherein the traveling information comprises road sections of the target road where the target vehicles travel and traveling speeds of the target vehicles on the road sections.

16. An electronic device, comprising a memory and a processor, wherein the processor runs a program corresponding to an executable program code by reading the executable program code stored in the memory to implement the method according to any one of claims 1 to 8.

17. A computer-readable storage medium storing a computer program, wherein when the computer program is executed by a processor, the method according to any one of claims 1 to 8 is implemented.

18. A computer program product comprising a computer program, wherein when the computer program is executed by a processor, the method according to any one according to claims 1 to 8 is implemented.

19. A computer program comprising a computer program code, wherein when the computer program code runs on a computer, the computer is caused to perform the method according to any one of claims 1 to 8.
